# EUROPEAN PATENT APPLICATION

(11) **EP 1 744 276 A1**
(43) Date of publication of application: **17.01.2007**
(21) Application number: 06012857.6
(22) Date of filing: 22.06.2006
(51) Int. Cl.: G06Q 30/00, G07G 1/00, H04H 9/00

(54) **Technique for correlating purchase behavior of a consumer to advertisements**

(30) Priority: 22.06.2005 US 158853
(71) Applicant: Weinblatt, Lee S., Teaneck, New Jersey 07666 (US)
(72) Inventor: Weinblatt, Lee S., Teaneck, New Jersey 07666 (US)
(74) Representative: Epping - Hermann - Fischer

(57) **Abstract**

A system for correlating a consumer's purchasing behavior to his/her exposure to advertisements. The advertisements are disseminated to consumers via the Internet, radio, television and direct mail. Monitoring data of the consumer's exposure to such advertisements are obtained. A scanner is used to allow the consumer to create electronic images of purchase records, such as receipts, obtained from the purchase of goods and services. The purchase receipts contain alpha-numeric characters which is recognized by an optical character reader application associated with the scanner. The optical character reader application identifies the purchased goods and services from the receipts. Once identified, the purchased goods and services can be correlated with the monitoring data.

## Description

### FIELD OF THE INVENTION

This invention is directed to a technique which monitors the advertisements and promotions to which consumers selected as test subjects are exposed as well as the subsequent purchases made by those consumers and, in particular, to an improved technique for collecting more data than has previously been feasible, and to correlate the purchases with the advertising and promotions.

### BACKGROUND OF THE INVENTION

Expenditures on advertising (e.g. television commercials, Internet advertising) and promotion (e.g. coupons) of consumer products in the U.S. typically exceed one hundred billion dollars in each calendar year. Advertisers who spend such huge sums of money understandably want to determine whether the money is being well spent and, if not, how improvements can be made.

Factors which affect the cost of an advertising and/or promotion campaign include (1) the extent of geographic coverage, (2) the advertising medium (e.g. print, radio, television), (3) how many advertising media are used, (4) frequency of use for the advertisement and/or promotion, (5) the time slot, and (6) the time duration of the campaign. When an advertising campaign is launched, these factors are decided upon based on various considerations of importance to a particular advertiser and which need not be delved into here. However, with the initial decisions having been made, the advertiser must have feedback to assess whether the campaign is working. A change in total sales is not enough because that could be happening regardless of, or perhaps even in spite of, the campaign rather than because of it. What the advertiser must know is (a) was a targeted portion of the public exposed to the campaign as planned, and (b) did the consumers who were exposed to the campaign purchase the product or services covered by it.

Various techniques are currently available to provide information of this nature. However, each of these suffers from various drawbacks. The first, and most primitive, involves an interview conducted by phone or, for example, at a shopping center. During such interview the consumer is asked to recall exposure to a particular advertisement and to disclose the subsequent purchases that were made. Results obtained with this technique are suspect because of the heavy reliance on memory, and a person's inclination to be biased, perhaps even subconsciously, in favor of what is of interest to the interviewer which then tends to color the consumer's responses to the interviewer's questions.

A second known approach involves recording the television programming, including commercials of course, watched in a particular household. Content from Internet access can also be recorded in a like manner along with advertisements that the Internet user is exposed to, such as banner ads, pop-up ads, etc. This information is stored in an electronic memory. Consumer purchase behavior is recorded by the use of a bar code reading apparatus, such as a wand, which is passed over each purchased product when it is brought home. Information available with this technique is of limited value because it is usable only with products bearing a bar code. A great number of products are not sold with a bar code, such as gasoline, pharmaceuticals, major appliances and unpackaged food items. Moreover, the purchase of services, such as is provided by airlines, movie houses and theatres, certainly cannot be monitored. Many products are also purchased away from home (e.g., lunch and snacks from a convenience store) and not brought home. Also, a great deal of effort by the consumer is required to scan each and every purchased item individually. Since the scanning must be done when the consumer returns home and before the purchases are stored away, the person is already tired and/or eager to get started on other tasks and, therefore, may not perform the scanning. Such failure to carry out the recording of purchases part of this monitoring approach is even more likely for perishable items such as ice cream which need to be refrigerated or kept frozen almost immediately upon the consumer's return home. Consequently, consumer cooperation with this technique is also suspect in addition to being of limited value due to total reliance on only bar-coded items.

A third technique involves a particular store that has been equipped with special computer equipment to identify certain consumers and to record their purchases. Identification of the consumer is accomplished with a card given to the consumer and on which a unique code has been recorded. When the consumer arrives at the cash register, the card is handed to the cashier who uses it to enter the code. As the purchases are "rung-up" on the cash register, they are also recorded as having been made by the consumer whose identity is established by the code on the card. This purchasing behavior is stored in the special computer, and the information is periodically downloaded to a computing center. That computing center also receives information on the television commercials and Internet advertisements to which the same consumer was exposed, and collected in the same way as described above for the second technique. However, this approach requires installation of relatively expensive computer equipment in a store, and only a very few stores can, therefore, be involved in the monitoring effort. Consequently, purchases made elsewhere by the consumer go unrecorded. As a result, the amount of information collected may provide less than a meaningful sample.

A fourth technique is to equip cash registers with a device to include machine-readable indicia on a sales receipt provided to consumers after the purchase of goods and/or services. The machine-readable indicia, such as a bar code, can then be read by a products/services code reader such as a bar code reader located in a consumer's home to identify the purchased goods/services. The bar code data can then be correlated with data representing the consumer's prior exposure to advertisements and used to gauge the effectiveness of such advertisements on the consumer's purchases. Such a technique is more-fully disclosed in U.S. Patent No. 5,401,946 to the same inventor. One drawback, however, is in the cost of equipping or "retro-fitting" cash registers with the hardware and software necessary to generate machine-readable indicia on the sales receipts. Another drawback is that retail store owners are reluctant to share consumer purchasing information with outside services or organizations. Therefore, these stores are averse to employing cash registers having such machine-readable indicia printing capability, especially if the data contained in the machine-readable indicia can be used by third parties.

In addition to the necessity for the advertiser to have the above-discussed advertising and purchase information, it is also valuable to collect, store and analyze related information as well. For example, many products are sold with promotions such as coupons, special sizes, product combination, sale price, etc. With such information, the advertiser can determine whether the product was likely to have been sold due to the advertisement or due to the promotion, or perhaps due to both. None of the above-described techniques is capable of collecting and storing such information. The terms "advertisement" and "advertising" when used hereinafter should also be understood in context as referring to promotions as well as radio, television, Internet and print advertising.

Consumers have been given rewards as a part of known monitoring techniques to improve the likelihood of obtaining an acceptable degree of cooperation from the consumer. Although the consumers who have been selected as test subjects may intend to cooperate, many things compete for time and attention with what the consumer is asked to do so that purchasing behavior can be monitored. Consequently, despite all the best intentions, the level of cooperation is likely to drop. Rewards are designed to counter this. With the second known technique discussed above, for example, once all the information on a consumer's advertising monitoring and purchase behavior has been processed by computer, certain rewards will be sent by mail. However, this can take several weeks due to the magnitude of data that must be processed. The impact of the reward diminishes with the amount of time which elapses from the doing of the reward earning activity until the reward is received. Thus, it would be helpful to speed up the process considerably. Also, the value of the reward to the consumer could be enhanced if it were targeted better. The targeting involves customizing the reward to the purchases that are made and/or the consumer who makes them. For example, if the consumer buys clothing, then the reward could be a dry-cleaning coupon. Likewise, if the particular consumer is a female, the coupon might be for a suitable accessory to the clothing, such as a scarf, perhaps even in the same store as the one where the clothing was purchased. The possibilities are endless. However, the prior art has not provided any way for speeding up the process of providing the reward and targeting the reward in order to gain the very considerable benefit of obtaining increased consumer cooperation.

One further shortcoming of the prior art is the inability to monitor whether direct mail advertising has been read or simply discarded. It would be highly useful for advertisers to know whether and how the consumer's purchasing behavior is affected by direct mail advertising.

The term "exposed" when it appears throughout this specification is used in the sense of locating the consumer who is a participant in the test in such close proximity to the advertisement that the probability of the advertisement having a mental impact is high. This requires that, for example, a radio advertisement monitoring system provide not only information about when the advertisement was broadcast or even that the consumer was in the same house as the radio set when the commercial was broadcast, but that the consumer was within a relatively small distance of the radio set at that time. The same relatively stringent requirements are applied to television commercial monitoring, Internet advertisement and print ad monitoring before it can be said that the consumer has been "exposed" to it.

### SUMMARY OF THE INVENTION

One object of the present invention is to increase the size of the data sample, at relatively low cost, for correlating purchasing behavior with exposure to advertising.

Another object of the present invention is to improve the reliability of such information.

A further object of the present invention is to determine the impact of promotions on consumer purchasing behavior.

Still another object of the present invention is to aid advertisers in assessing the level of interaction between different forms of advertising for determining the best combination of scheduling, relative spending in each of the advertising media, and the order of presentation as to which medium should be advertised in first, second, etc.

Another object of the present invention is to provide meaningful results very soon after the purchasing data is recorded by the consumer.

Yet another object of the present invention is to facilitate the monitoring of purchasing behavior by avoiding the need to retrofit equipment at the point of sale.

These and other objects of the present invention are attained by one aspect of the present invention which is directed to a method for obtaining and storing information on the purchasing behavior of a consumer as well as advertisements to which the consumer has been exposed. Exposure of the consumer to advertisements is monitored. A record containing purchase information, in the form of alpha-numeric characters, is produced at a place of purchase of a good or service, wherein the purchase information corresponds to goods or services purchased by the consumer. The record is read in the home of the consumer, and signals obtained from the advertisement monitoring step and the reading step are stored.

Another aspect of the invention is directed to an apparatus for obtaining and storing information on the purchasing behavior of a consumer as well as advertisements to which the consumer has been exposed. An advertisement monitoring means monitors exposure of the consumer to advertisements. A unit for use in a home of the consumer includes means for reading purchase information in the form of alpha-numeric characters presented on a record provided by a seller of goods or services evidencing the purchase thereof. A means is provided for storing output signals from the advertisement monitoring means and the reading means.

A further aspect of the invention is directed to an apparatus for monitoring purchasing behavior of a consumer. A unit for use in a home of the consumer includes means for reading purchase information in the form of alpha-numeric characters presented on a record provided by a seller of goods or services evidencing the purchase thereof. A means is provided for storing data associated with the purchase information. The home unit further includes means for detecting when a predetermined threshold has been reached of a selected category of data stored in the data storing means, and a means coupled to the detecting means for issuing a reward to the consumer when the threshold is reached.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that, unless otherwise indicated, they are merely intended to conceptually illustrate the structures and procedures described herein.

### BRIEF DESCRIPTION OF THE DRAWINGS

In the drawings:

FIG. 1 is a block diagram of an apparatus arranged in accordance with the invention for monitoring the advertisements to which a consumer is exposed and the subsequent consumer purchasing behavior.

FIG. 2 is a block diagram of an apparatus designed in accordance with the invention for home use by the consumer to combine and store the monitored advertisements information and consumer purchase information to speed up the process of obtaining test results and to issue an instantaneous reward to the consumer.

FIG. 3 is a flow chart depicting how CPU 55 in FIG. 2 is programmed to issue an instantaneous reward to the consumer.

FIG. 4 is a flow chart depicting how CPU 55 in FIG. 2 is programmed to speed up the process of obtaining test results.

### DETAILED DESCRIPTION OF THE DRAWINGS

Monitoring of the exposure to advertisements by consumers has been done for quite some time, and is well known. A number of techniques have been utilized for the print, radio television and Internet media. Any of those techniques can be used for the present invention, as long as the results are stored in advertising monitoring memory 3 of advertising monitoring system 1. However, in order to minimize the inconvenience to the consumer and maximize the reliability of the data, the following particular techniques for monitoring each of these types of media are preferred.

It is desirable to monitor the exposure of a consumer who has been selected as a test subject under realistic rather than artificial conditions. Consequently, the testing environment is not that of a test laboratory but, rather, any location to which the consumer is likely to go during a regular day. This includes, of course, the home and other similarly common and normal sites for one's daily activities. Otherwise, it is felt that the test results may be skewed due to the artificial conditions to which the consumer would be subjected. It is also preferable to minimize contact of the consumer with testing personnel, and this is done by automating the monitoring process.

In order to automate monitoring of the consumer on his daily routine, it is necessary to provide him/her with an apparatus that can do the requisite monitoring while not restricting his/her movement or being so obtrusive as to somehow affect the testing. This is particularly so with respect to any apparatus which monitors exposure to radio advertisements and print ads which are likely to occur away from the house or office in contrast to television and Internet exposure which is most likely to occur in the house or office, e.g., place of work, etc. Thus, the system 1 for monitoring the radio and print media is preferably portable and is such as to be conveniently worn on the person of the consumer. For television commercials and Internet advertisements, on the other hand, it is less important because an apparatus could effectively be used which is installed in the home or office.

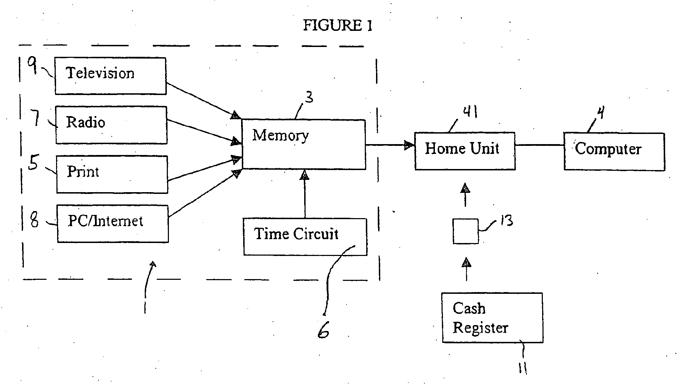

FIG. 1 depicts an advertising monitoring system 1 for monitoring consumer exposure to the various types of advertisements, including print, radio, television and Internet media. The monitoring results are stored in memory 3 to be later combined in home unit 41 with information obtained from a purchase record (i.e. a receipt) generated by a cash register 11 for processing and analysis by computer 4. Thus, data collected from monitoring system 1 is ultimately input to computer 4 along with data collected by scanning purchase records 13. Computer 4 then produces an output showing the relationship of the monitored consumer exposure to advertisements with respect to the purchased items. Computer 4 can be programmed in a conventional, well known manner to output this relationship in any desired form, such as tabulated or graphical.

It will be appreciated that in connection with goods and services which are purchased via the Internet, traditional "receipts" or records are not generated by cash registers located in a store. Instead, purchase records are sent electronically via email to the purchasing consumer's email account. Thus, the "point of purchase" in such a case is the consumer's computer, as opposed to a retail store as in the case of a traditional purchase of goods or services. A paper copy of the electronic receipt can be printed by the consumer in a known manner.

Turning now with more specificity to the detailed configuration of monitoring system 1, it includes apparatus 7 for measuring the exposure of a consumer test subject to radio advertisements. Such an apparatus is disclosed in U.S. Pat. No. 4,718,106 issued Jan. 5, 1988 to the present inventor. That patent is hereby incorporated by reference. Briefly, this patent discloses an apparatus that can be incorporated into a wristwatch. It includes a microphone for picking up audible signals from a radio set. A particular survey code signal is periodically transmitted by the radio station and subsequently audibly reproduced by he radio set to be picked up by the microphone. The microphone outputs a resulting signal to a detection circuit which has been preset to produce an output signal only when the particular survey code signal is detected. Such an "event" is stored in an electronic memory together with the associated time. The microphone and its associated circuitry have a sensitivity set such that the survey code signal will be detected and processed only if the consumer is within a relatively short distance from the radio. Thus, it is possible to determine when (i.e. from the recorded time) the consumer was listening to that particular radio station (i.e. from the recordal of an "event" based on a signal transmitted only by that station). By combining this knowledge with the time during which a particular advertisement was being broadcast by the radio station, it is possible to determine that the consumer was "exposed" to it.

The television commercial monitoring apparatus 9 can be implemented as disclosed in U.S. Pat. No. 4,695,879 issued Sep. 22, 1987 to the same inventor. That patent is hereby incorporated by reference. Briefly, it discloses an apparatus coupled to the television tuner which keeps a record of the channels being viewed throughout the day. A detector is worn by the viewer on the head and includes a receiver responsive to signals emitted from a transmitter installed near or on the television set. The receiver is directional so that it responds only when the head of the viewer is aimed substantially toward the television set. When the receiver detects a signal from the transmitter, it in turn emits its identification code to circuitry which records the event, and that can also be located on the television set. Thus, the event of having the viewer aiming his head at a television set at any particular time is combined with information on what channel is being viewed at the same time to provide an indication of exposure of the viewer to that particular channel. If it is known what advertisement was being broadcast at that particular time on that particular channel, it can be determined that the viewer was "exposed" to it by virtue of having his head aimed at the television set.

In addition to use of U.S. Pat. No. 4,695,879 to monitor television commercials to which the consumer has been exposed, U.S. Pat. No. 4,718,106 mentioned above can, of course, also be used for this purpose by adapting it to television use rather than radio. In particular, the consumer/viewer test subject can be provided with circuitry incorporated, for example into a wristwatch. That circuitry would include a detector responsive to a code signal transmitted by the television station, for example, and in response only thereto a signal source in the television set would be activated. The resulting emitted signal from the signal source is detected by circuitry in the wristwatch and recorded as an "event" along with the time at which it occurred and it indicates "exposure" because the consumer was within a short distance from the set when it was tuned at that time to the channel transmitting the code signal (and therefore advertisement) of interest. All that information would be stored in memory incorporated within the wristwatch.

Print ad monitoring apparatus 5 can be implemented as disclosed in U.S. Pat. No. 4,659,314 issued Apr. 24, 1987 to the same inventor. This patent is hereby incorporated by reference. Briefly, the invention in this patent involves an insert "card" frequently found slipped into magazines. The insert card carries a switchable transmitter and a switch. When the magazine is opened, the transmitter will be automatically switched on to energize the transmitter. The resulting emitted signal is picked up by suitable circuitry as an "event" indicative of exposure of the consumer to the magazine and the ad of interest.

An Internet monitoring apparatus 8 can be installed in a PC in a user's home or office to monitor the user's Internet traffic, i.e. the websites visited by the user or the "banner" or "pop-up" ads exposed to the user during Internet browsing. As an example, one suitable apparatus is disclosed in U.S. Pat. No. 6,366,298 issued Apr. 2, 2002 to Haitsuka et al. Still other Internet monitoring systems will be readily known to those having ordinary skill in the art.

Monitoring system 1 is shown in the drawing as including electronic memory circuit 3 in which the information from apparatuses 5, 7, 8 and 9 is stored. Thus, the data in circuit 3 contains measurements made in each of the radio, television, print and Internet media of the exposure by the consumer to advertisements. Circuit 3 has been depicted as a separate data storage device for the sake of convenience, clarity and ease of explanation. However, it should be understood that each of systems 5, 7, 8 and 9 can likewise have an individual electronic memory circuit incorporated therein from which the data can be outputted to computer 4 via home unit 41. In fact, this is the case for each of the specific implementations discussed above. However it should be understood that each of those implementations was disclosed in the patent document as an individual monitoring unit. It is clearly not necessary to have individual storage devices when the four monitoring systems are combined in a single unit. Thus, for example, if the monitoring for the four advertisement media is incorporated into, for example, a wristwatch, the wristwatch will have only one electronic memory circuit 3 into which data from all the monitoring systems is stored. On the other hand, should individual monitoring systems be preferred for a particular application, each can have its own storage device. Then, as stated above, the data from each such storage device is downloaded into computer 4 without a further intervening memory circuit 3.

Monitoring system 1 is also depicted in the drawing as having a time circuit 6. As events are detected indicative of exposure by the consumer test subject to a particular advertisement, this event can be associated with a particular time that is obtained from time circuit 6. If the apparatus is incorporated into a wristwatch, the source for such a signal is readily available. Otherwise, a specialized circuit for providing a time signal is provided. It should be understood that each of systems 5, 7, 8 and 9 can be provided with an individual time circuit, much as has been pointed out above with respect to the electronic memory circuit 3. However, a single time circuit 6 for all of monitoring system 1 has been depicted in the drawing for, again, ease and clarity of explanation.

Once the advertising monitoring information has been collected and stored, it is necessary to collect information on the purchasing behavior of consumers so that the exposure to advertising can be correlated with the purchasing behavior, as explained above. One way this may be accomplished is to retrofit receipt-generating devices, such as cash registers, with a device for printing machine-readable indicia on each receipt. Such a device can be implemented as disclosed in U.S. Patent No. 5,401,946 issued May 28, 1995 to the same inventor. That patent is hereby incorporated by reference. The most common type of machine-readable indicia is a bar code, but other types exist, such as watermarks, hologram marks, etc. which are well-known to those of ordinary skill in the art. As discussed above, however, equipping all or at least a vast majority of cash registers with the capability and functionality to print machine-readable indicia on receipts is costly. Moreover, such an undertaking will, invariably, require the consent of the cash register manufacturers so that compatible technology can be used for the numerous makes and models of cash registers that will need to undergo such modification. In addition, retail store owners and other goods and/or service providers may be reluctant to allow their cash registers to be modified to allow third parties to derive customer purchase data.

Rather than, or as an enhancement to, a system which reads machine-readable indicia on purchase receipts or directly from product packaging for identifying goods or services purchased by consumers, a home scanner and processor can be employed for reading and deciphering alpha-numeric characters that already exist on conventional receipts generated by cash registers (and from printed receipts of Internet purchases of goods and services) to allow customers to identify items that have been purchased. Such alpha-numeric characters may also provide the purchase price and typically the time/date of purchase and the purchase location, e.g., the store name and address.

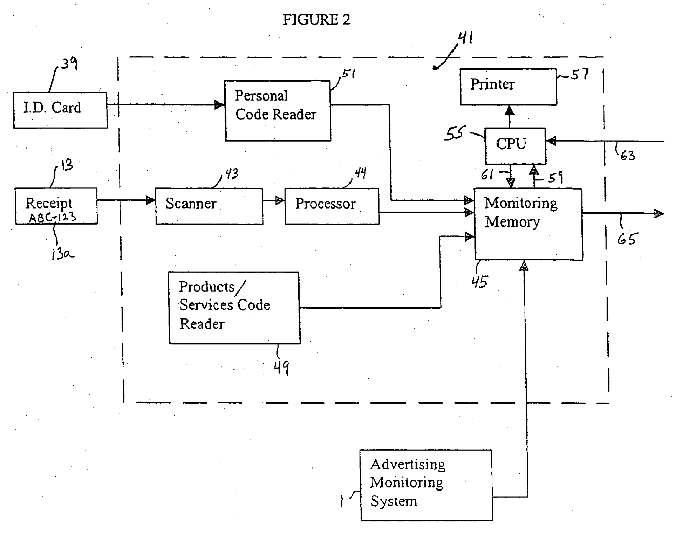

The processor used for deciphering the information contained on the scanned receipts will include optical character recognition (OCR) software as is known in the art. Such a system is shown in FIG. 2 and is discussed more-fully below. In general, however, a receipt containing alpha-numeric characters, i.e. text, will be fed to a scanner for generating an image of the receipt which is then fed to the processor which runs OCR software. The OCR software will then decipher the characters on the receipt image and identify the purchased items or services and possibly other information (e.g., price, purchase date, etc.) from the characters on the receipt. A suitable scanner and processor device along with associated software for identifying items from characters printed on receipts are available from "Neatreceipts" having an address at 3624 Market Street, Suite 307, Philadelphia, PA 19104. More information is available on www.neatreceipts.com.

In order to make it easier for the scanner to interpret the scanned words, a "set-up" key code could be used (i.e., supermarket, retail, travel, pharmacy etc.) that would bring up a limited number of words commonly used in that category. Therefore, under "supermarket", it would know that either "Hz, Hnz, or Heinz" is the brand Heinz.

FIG. 2 depicts details of an apparatus 41 for producing an output 65 as a correlation of the consumer's purchases and the exposed-to advertisements. As is explained below, a record 13, namely a paper receipt is inserted into a reading unit 43 such as a scanner. The record 13 contains purchase information thereon which comprises alpha-numeric characters 13a describing the purchased goods or services sold to the consumer. Also, if a credit card is used for the purchase, the receipt would also include some or all of the credit card number so that the identity of the purchaser can, in most cases, be ascertained. Thus, characters 13a would identify the product by name as well as the price so that the consumer can double check the charges. If the credit card number is included, the purchaser can also be identified.
For example, if several household members are on a single credit card account, each member will typically have his/her own card with a credit card number that varies from the others by a few digits.

Home unit 41 depicted in FIG. 2 is designed for use with such purchase receipts, or records. Record 13 is inserted into the scanner 43 to create a scanned image which is then supplied to a processor 44 having OCR software for identifying the characters on the record. Thus, as record 13 passes through scanner 43 and the data contained thereon deciphered by processor 44, all of the information on the record is outputted for storage in monitoring memory 45. Monitoring memory 45 also receives the advertising monitoring information from memory 3 in advertising monitoring system 1. For example, as disclosed above, memory 3 can be incorporated into a wristwatch with suitable ports and controls to download its memory contents into memory 45. Thus, memory 45 stores the advertising information, as obtained from memory 3, and the purchase information, as received from processor 44. That information can be downloaded to computer 4. Computer 4 could, for example, be located at a remote computing center, and the downloading would be done by any known means, such as via telephone, a cable connection or wirelessly. Alternatively, all of the information stored in memory 45 can be recorded on a magnetic disc, and that disc can then be sent to the computing center.

Home unit 41 may also include a products/services code reader 49 such as a bar code reader which can be used to read bar codes contained on purchased products or packaging for purchased products, or if present, on receipts. Reader 49, therefore, allows a consumer to "scan-in" purchased products for storing associated data in the monitoring memory 45.

Home unit 41, or at least portions thereof, can be made as a small, portable unit for use in the home but which can also be conveniently taken along when leaving home. For example, since printer 57 is relatively bulky, a portable unit will include only scanner 43 and processor 44, perhaps with personal code reader 51 and products/services code reader 49. The other components of home unit 41 can remain at home.

With the technique of the present invention as described up to this point, it is possible to collect a vast amount of purchasing information with minimal expenditures for specialized equipment and with only a relatively minor effort on the part of the consumer. It will be recalled that one of the above-discussed prior art techniques was of limited value because it involved the necessity of installing a significant amount of computing power in a store, and this for practical reasons could only be done in a very few stores. The prior art techniques discussed above also required the retrofitting of a bar code printing apparatus to existing cash registers. However, with the present invention, the cash register need not be modified at all. Instead, all of the purchasing information is obtained by using unit 41 in the user's home by inserting conventional purchase receipts into scanner 43.

It will be recalled from the discussion of the prior art presented above that a prior art technique requires separately scanning each and every one of the purchased products with a wand to detect its bar code and thereby identify the product so that it can be stored as part of the purchases record. This is a tedious activity which the consumer is apt to delay and, consequently, neglect at least in part. As a consequence, the data collected is suspect. However, with the present invention no such tedious activity is required. All the consumer needs to do is to merely insert the receipts, or records, 13 into scanner 43. This requires minimal time and effort and, therefore, is much more likely to be done than the tedious approach of the prior art. In other words, rather than using reader 49 to scan labels on the actual products or packaging, the paper receipts are processed directly via scanner 43 and processor 44.

It was stated above that one object of the present invention is to record the purchase of goods to which a bar code is not affixed, and also to record the purchase of services. The present invention lends itself to doing so by virtue of the fact that goods and services can be readily, inexpensively, and conveniently identified directly from the printed alpha-numeric (e.g., non-bar code) indicia on the receipt, thus alleviating the need for retrofitting cash registers with the hardware and software for printing bar codes on receipts.

Home unit 41 also includes a personal code reader 51 which will identify a consumer to the apparatus 41. This reader provides a unique code assigned to the consumer for recordal in memory 45 when it is detected from an identification card or other form of identification means, such as a fingerprint scanner, security code input on a keypad (not shown), or any other identification device known in the art. Such an identification code may not be required if the consumer's identity is already contained on the record 13, e.g. from a credit card number corresponding to the consumer. However, the identification code may be required for associating the products and services identified from the record 13 with a particular consumer. For example, each household may have several consumers as part of the test. It would not be possible to know which of them purchased the product or service represented by record 13 if the purchase was not made with a credit card associated with the consumer, unless that consumer is identified to the apparatus 41, such as by passing his/her card 39 through reader 51. Thus, it is readily apparent from the above that in addition to the already discussed advantages of the present invention, it is also possible to identify each purchase to a consumer.

Processor 44 preferably provides a redundancy prevention feature in order to prevent mistakenly processing the same record 13 more than once. For example, in the case of an Internet purchase of goods, a receipt containing a description of the goods and a purchase confirmation number is transmitted electronically to the consumer for printing. When the goods are later delivered to the consumer, a packing slip is included in the packaging. The packing slip will also, typically, contain the same confirmation number. If a consumer attempts to scan in both the receipt and the packing slip, the unit 41 will recognize from the common confirmation number the duplicative record and will only process one of them.

Another protection against double recording could be that the scanner places a special mark (visible or not) on the back of the receipt that prevents a second reading.

It was explained above that direct mail advertising constitutes a significant percentage of the total amount spent on advertising, but the advertiser is left in the dark as to whether the consumer even opened the envelope or proceeded to directly toss it away. The present invention lends itself very well to monitoring the impact of direct mail advertising on the consumer. In particular, scanner 43 in home unit 41, or a separate reader or scanner (not shown), could be adapted to scan a specially provided code on the envelope or on literature, such as coupons, sent inside the envelope. The former approach could combine the reader with an automatic envelope opener to increase the likelihood that the contents of the envelope will be examined. The latter approach is inherently indicative of the fact that the envelope has been opened and its contents exposed to the consumer. Thus, if a coupon sent with direct mail advertising is scanned by home unit 41 and recorded in monitoring memory 45, the advertiser can determine whether that coupon was actually used by the consumer in making a purchase since a coupon code on the coupon will, in all likelihood, also be imprinted on the record given to the consumer after purchase. Thus, once the record containing the coupon code is processed by the scanner 43 and processor 44, the monitoring memory will correlate the coupon code from the direct scanning of the coupon with the purchase from the later-scanned record. Thus, the advertiser can determine, on the one hand, whether the consumer was exposed to the coupon based on information recorded by home unit 41 and, on the other hand, whether the coupon had its desired effect in getting the consumer to make a purchase based on information printed on the record. If it is determined based on this technique that the coupon did not provide the necessary incentive for the consumer to purchase the particular product, then the advertiser might try increasing the value of the coupon in order to assess whether that will have the desired effect. Consequently, the present invention provides the advertiser with a very powerful tool to determine, first, whether direct mail advertising is exposed to the consumer and, secondly, whether such advertising had its desired effect and, if not, whether the desired effect can be obtained by changing the direct mail advertising campaign.

The present invention also lends itself very well to aid advertisers in assessing the level of interaction between different forms of advertising. This can be used by the advertisers for determining the best combination of scheduling, relative spending in each of the advertising media, and the order of presentation as to which medium should be advertised in first, second, etc. More specifically, and in particular with regard to television and radio advertising, a determination is initially made in some manner which need not be discussed here that the advertisements will appear at certain intervals (i.e. scheduling) in a particular advertising medium. As a second stage, the advertisement will appear in another medium together with or replacing the first medium, and so on. The relative amount of money (known by the term "weight") spent in each of these media will depend on the frequency of appearance of the advertisement, the time slot, etc. Once the campaign is run in this manner, the purchasing results will be monitored. With the purchasing results in, the advertising campaign particulars can be juggled by changing the scheduling, weight and/or the order of presentation. The purchasing results can then be compared with those obtained previously in order to ascertain whether a desirable or undesirable trend is occurring. Further refinements of the campaign can then be made.

The value of the present invention can be enhanced by providing home unit 41 with the capability of carrying out computer processing by CPU, i.e. central processing unit) 55 and a printer 57. CPU 55 is a programmable digital computer capable at least of communicating with another computer, controlling a printer, and controlling operation of an electronic memory. In fact, monitoring memory 45 can be a part of CPU 55. This type of apparatus is conventional and well known. CPU 55 is in communication with monitoring memory 45 both to receive data therefrom on line 59 and to provide instructions thereto on line 61. Of course, lines 59 and 61 can also be implemented in the form of a bus. CPU 55 is connected to printer 57 for providing data to, and controlling the operation of, printer 57. CPU 55 also receives data and control signals on line 63 from computer 4. Monitoring memory 45 provides an output on line 65 to computer 4. Lines 63 and 65 can be one and the same.

It has been explained above that one deficiency of the prior art is the time lag between an action taken by a consumer which is deserving of a reward and the actual receipt by the consumer of that reward. A span of several weeks is typical. This significantly reduces the impact of the reward on the behavior of the consumer. A maximum impact is obtained if the reward follows immediately upon the occurrence of an act carried out by the consumer. However, it has not been possible to do so with the prior art because eligibility for a reward must await the processing of a huge amount of data from all of the consumers who are participating in the test. However, the present invention provides the following solution.

CPU 55 controls monitoring memory 45 to establish certain "areas" in the monitoring memory which correspond to categories of products and/or services,. Thus, for example, a particular area in monitoring memory 45 would be assigned to health related products, such as mouthwash, toothpaste, etc. Another such category would be assigned to cereals, while still another would be assigned to items of clothing. As the purchasing information in the form of records (i.e. receipts) is input to monitoring memory 45 from scanner 43 and processor 44 in home unit 41, the purchase information is routed to these categories based on the code associated with each purchased item. When, for example, five items have been recorded into a particular category, this is detected by CPU 55 based on data provided to it on line 59, and CPU 55 responds by controlling printer 57 to generate a coupon as a reward to the consumer.

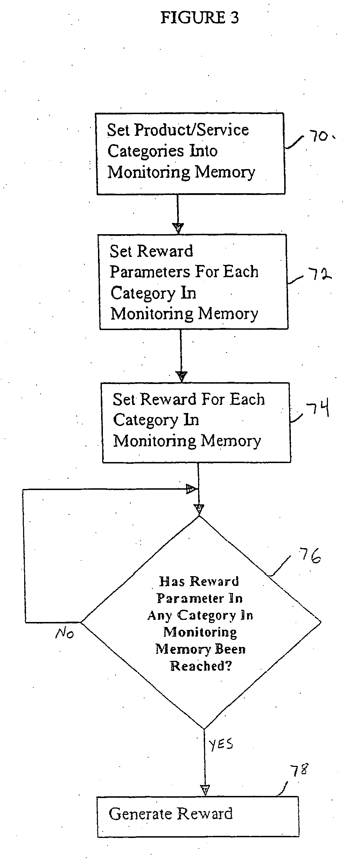

The manner in which CPU 55 is programmed to carry out this operation is shown by the flowchart depicted in FIG. 3. Step 70 is carried out in response to signals from computer 4 provided to CPU 55 on line 63. The control signals from computer 4 are used by CPU 55 in step 70 to set the categories based on one or more codes respectively corresponding to purchased products and/or services. Each of these categories is assigned an area in monitoring memory 45. Of course, anyone skilled in the art knows that the mention of "area" is only a graphical way of picturing what is really occurring in monitoring memory 45. It is not necessary to actually have an area, as such. This merely refers to the assignment of addresses in memory which are associated with a particular category. In any case, when the categories are set into monitoring memory 45 in the manner described just above, CPU 55 proceeds in step 72 to set reward parameters for each of these categories. This is done also based on signals provided on line 63 from computer 4. Such a parameter can be, for example, the number of entries stored for each category. This number can, of course, vary from category to category. The reward parameter can also be time. In particular, a reward can be generated only if the purchase is recorded within a particular time from when the purchase was actually made, as is determinable from the time and data information stored on record 13.

Per step 74, CPU 55 also stores a specific reward for each category. Again, this is done based on signals received on line 63 from computer 4. The reward can be the same regardless of the identity of the consumer if it depends, for example, strictly on the number of entries stored in the category or the elapsed time, as explained above. On the other hand, the reward can also be targeted to particular individuals. Thus, if the reward is such as to be based on the personal code obtained from record 13 or reader 51, CPU 55 can determine whether the consumer is a male or a female from a profile of the consumer stored in CPU 55 and accessible with the personal code store on record 13 or entered with reader 51. The reward might be different for a male consumer than if a female is thusly identified. Decision box 76 represents steps carried out to determine whether the reward parameter set for any of the product/service categories has been reached. If one has not been reached, then a loop is established which repeats this test. If one has been reached, then step 78 controls printer 57 to print out the reward which corresponds to the particular category involved. Thus, this provides a powerful tool for instantly rewarding the consumer by virtue of providing the means in the home of the consumer which monitor, record, process, analyze and immediately respond to the data collected in monitoring memory 45 for generating a reward by virtue of printer 57. In addition, this technique provides the advertiser with the capability of targeting the reward based on the actual purchases that are made and/or to a particular consumer. Thus, a different reward will be generated if the consumer is purchasing soda beverages than if the purchased product is ice cream and the reward may be further varied based on the gender of the consumer.

Home unit 41 as depicted in FIG. 2 also makes it possible for the advertiser to increase the size of the consumer audience participating in the test while shortening the time required for obtaining meaningful results even with the larger audience. With prior art techniques, the use of a greater number of test participants would mean an increase in the amount of gathered data, and a commensurate delay in producing the test results and making them available to the advertiser. Of course, the advertiser who is undertaking major expenses on a daily basis wants to know as soon as possible what the impact of the campaign is so that modifications thereto can be made in order to maximize the investment. Thus, on the one hand, the advertiser wants to increase the sample size in order to make the results as meaningful as possible while, on the other hand, the advertiser wants to get the results as soon as possible so that a waste of money on a less than helpful campaign can be avoided. This is not possible with the prior art. However, the present invention provides an excellent way of accomplishing these seemingly conflicting goals.

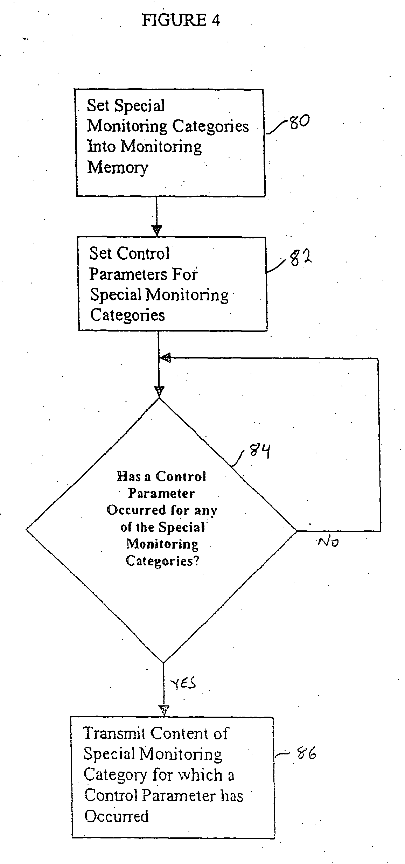

FIG. 4 shows how CPU 55 can be programmed to implement this technique. Specifically, based on signals from computer 4 provided on line 63, CPU 55 sets special categories into monitoring memory 45 much in the same way as this was done in FIG. 3. These special monitoring categories can be for both the monitoring of advertisements to which the consumer was exposed as well as to the monitoring of the consumer purchasing behavior. Thus, one category could be set for only television programs watched by the consumer, similar to Nielsen ratings, and/or monitoring of television commercials. Another category could be set for the purchase of a particular product or group of products. This setting of categories is represented in step 80. CPU 55 then sets control parameters for each of these special monitoring categories. This is represented by step 82 which is also carried out in accordance with signals from computer 4. The control parameter can be, for example, the receipt of a trigger signal from computer 4 on line 63. Another control parameter might be the occurrence of a pre-set number of items in a particular category. Thus, if the consumer has purchased five boxes of cereal on a particular shopping expedition, this occurrence can be detected by judicious setting of the control parameter so that the advertiser can identify every household which is a heavy user of cereals. Another control parameter might be time, so that a purchase made on a particular day of the week, for example, will be identified. In any case, decision box 84 senses whether such a control parameter has occurred. For example, it can be determined whether a triggering signal has been detected from computer 4. If so, then all of the categories associated with that trigger signal will be transmitted per step 86 to computer 4 for additional processing. This approach makes it possible to focus on only a certain limited portion of the total amount of data stored in monitoring memory 45. Thus, if an advertiser must have results very quickly, his product is separated into a special category and suitable control parameters are set. Then, only his data must be transmitted to computer 4, collected, processed, analyzed and output. This is a very valuable feature made available with the present invention. In addition, a large increase in the number of consumer test subjects is possible because only a limited portion of the data generated by all of them needs to be retrieved from monitoring memory 45 and processed in order to obtain the results of greatest immediate interest.

Although a preferred embodiment of the present invention has been disclosed in detail above, it will be apparent that various modifications thereto can readily be made. These and other such modifications are all intended to fall within the scope of the present invention as defined by the following claims.

## Claims

1. A method for obtaining and storing information on purchasing behavior of a consumer as well as advertisements to which the consumer has been exposed, comprising the steps of:
monitoring exposure of said consumer to advertisements;
producing at a place of purchase of a good or service a record containing purchase information, in the form of alpha-numeric characters, said purchase information corresponding to goods or services purchased by said consumer;
reading said record in the home of said consumer; and
storing signals obtained from said advertisement monitoring step and said reading step.

2. A method of claim 1, wherein the step of monitoring exposure of said consumer to advertisements includes wearing a portable monitoring unit by said consumer.

3. An apparatus for obtaining and storing information on purchasing behavior of a consumer as well as advertisements to which the consumer has been exposed, comprising:
advertisement monitoring means for monitoring exposure of the consumer to advertisements;
a unit for use in a home of the consumer including means for reading purchase information in the form of alpha-numeric characters presented on a record provided by a seller of goods or services evidencing the purchase thereof, and
means for storing output signals from said advertisement monitoring means and said reading means.

4. An apparatus according to claim 3, wherein said home unit further including:
(a) means for detecting when a predetermined threshold has been reached of a selected category of data stored in said data storing means, and
(b) means coupled to said detecting means for issuing a reward to said consumer when said threshold is reached.

5. An apparatus according to claim 3 or 4, wherein said advertisement monitoring means is portable and worn by the consumer.

6. An apparatus of claim 5, wherein the selected category of said data is related to one of a number of purchased products and a value of purchased services of a predetermined type.

7. An apparatus according claim 4 or 5, wherein the selected category of said data is related to time which has elapsed from when a product or a service was purchased.

8. An apparatus according to one of the claims 4 to 7, wherein the means for issuing a reward targets the reward based on a characteristic of the consumer.

9. An apparatus according to one of the claims 4 to 8, wherein the means for issuing a reward targets the reward based on a characteristic of what the consumer has purchased.

10. An apparatus according to one of the claims 4 to 9, wherein the purchase information is related to purchases subject to promotions.
